Europäisches Patentamt

European Patent Office

Office européen des brevets

(11) Publication number: **0 543 349 A1**

# EUROPEAN PATENT APPLICATION

(21) Application number: **92119640.8**

(22) Date of filing: **17.11.92**

(51) Int. Cl.⁵: **B32B 27/24**, E04B 1/94

(30) Priority: **19.11.91 US 794561**

(43) Date of publication of application:
**26.05.93 Bulletin 93/21**

(84) Designated Contracting States:
**AT BE CH DE DK ES FR GB GR IE IT LI LU MC NL PT SE**

(71) Applicant: **H.B. FULLER LICENSING & FINANCING, INC.**
**1100 North Market Street, Suite 780**
**Wilmington, Delaware 19801(US)**

(72) Inventor: **Hagquist, James A.E.**
**2120 Berkeley**
**St. Paul, Minnesota 55105(US)**
Inventor: **Batdorf, Vern H.**
**5014 − 41st Avenue South**
**Minneapolis, Minnesota 55417(US)**

(74) Representative: **Strasse, Maiwald, Meys, Stach & Vonnemann**
**Balanstrasse 55**
**W−8000 München 90 (DE)**

(54) **Intumescent composite material.**

(57) A barrier material for protecting construction materials and the like from fire comprises a composite having at least two layers applied to a substrate to be protected such as gypsum board. An inner layer of the composite, adjacent to the substrate to be protected, comprises an inorganic intumescent material. An outer layer comprises an inorganic composition fusible at a temperature of about 700°F or higher. The outer layer, when subjected to its fusion temperature provides a flexible continuous high temperature protective barrier between the intumescent composition of the inner layer and a fire. The fused surface of the outer layer accommodates the intumescent expansion of the underlying layer(s).

The outer layer may comprise an alkali silicate which has intumescent properties at lower temperatures, but which provides an expandable fused vapor barrier for the intumescent expansion of the inner layer at higher temperatures. The inner layer intumescent material may also be an alkali metal silicate but is more preferably a borate compound.

EP 0 543 349 A1

## Background of the Invention

1. Field Of the Invention

In the field of fire protective coatings for construction materials, a variety of options are available depending on the degree of fire resistance required, the nature of the substrate to be protected, cost, and limitations imposed by architectural considerations such as weight, strength, environmental resistance, installation ease and aesthetics.

One method of providing fire resistance to a substrate is to provide a layer of intumescent material at or near the surface which, when heated, expands to provide an insulative fire resistant barrier coating protecting the underlying substrate from the heat of the flame. Organic materials which expand and char when subjected to high temperatures and inorganic materials which can provide airy, ash − like expanded structures are included in this broad category of intumescent materials.

Intumescent materials, when activated, commonly have a significant problem in that they have extremely low strength so that the insulated structure which they form is often torn off by the turbulence of the fire or the activity of fire fighting so that the protection of the intumescent material is lost. There is, therefore, a need for improved fire protective systems employing intumescent materials which resist physical destruction when activated. Further, such improved systems should provide solutions to the degradation problem at reasonable cost and without imposing significant architectural problems.

2. Description of the Related Art

U.S. 3,816,226 describes a composite laminate material having a compressed layer of a fire resistant material such as fiberglass or mineral wool impregnated with a resin which will melt or decompose at a relatively low temperature so as to allow the compressed fire resistant layer to expand. An intumescent coating on the exterior surface may provide further fire resistance. No protection is provided against physical degradation of the intumescent layer during exposure to flame.

U.S. 4,756,945 describes a heat − expandable blanket material to provide fire protection which includes a backing substrate of inorganic fiber fabric coated with a heat expandable fire − proof layer. The heat − expandable layer includes particles of vermiculite, perlite or the like, inorganic fibers, and a binder which may be a latex or an inorganic binder such as plaster or cement.

U.S. 4,048,363 describes an offset laminated intumescent mounting mat of intumescent material which is wrapped and adhered around a ceramic monolith to facilitate insertion of the monolith in coverings and retention therein after heating above the intumescing temperature.

U.S. 4,686,244 describes a filled silicone elastomer containing hollow thermoplastic microspheres filled with a volatile liquid which acts as a blowing agent, causing the material to foam when heated so as to fill voids which otherwise would permit spread of smoke in fire.

U.S. 3,320,087 describes a liquid coating material of phenol − formaldehyde resin and aluminum chloride which has intumescent properties.

U.S. 4,767,656 describes a load bearing composite comprising a matrix of a thermally resistant material such as a polyamide and an outer layer of a woven fabric, preferably a ceramic, which will resist flame penetration of 2,000°F for at least 15 minutes. Inner layers of the composite are reinforced with other fibrous materials to provide structural strength.

U.S. 3,336,153 describes a fire resistant tape having an intumescent coating applied to its backing.

U.S. 3,914,513 describes a coating material having an intumescent component comprising a mixture of pentaerythritol polyurethane and a melamine phosphate.

U.S. 4,366,203 describes laminated plastic foam articles said to have good fire resistant properties which are faced with a composite layer of vermiculite lamellae and metal foil.

U.S. 4,058,643 describes an insulation batting material having a plastic backing bonded thereto with an adhesive having intumescent properties to provide a barrier against wicking of melted plastic backing material into the batting when exposed to high temperatures.

U.S. 4,366,204 describes laminated foamed articles faced with a fibrous composition of glass fibers and vermiculite lamellae.

U.S. 4,265,953 describes a tape which includes an intumescent material adhered under the backing.

U.S. 4,299,872 describes a thermal barrier in which an intumescent material is provided in a hon − eycomb structure, the honeycomb providing room for expansion and protection of the intumescent material.

U.S. 3,934,066 describes an intumescent laminate system comprising a paper over foam saturated with an organic intumescent composition and having a flexible metal or plastic cover layer. Intermediate layers of vapor and/or thermal barrier materials between the intumescent saturated paper or foam and the heat sensitive substrate may also be provided.

U.S. 4,801,496 describes fabric reinforced plastic composite materials in which an intumescent material is interposed between an outer fiberglass reinforced shielding layer and the bulk of the composite which may be graphite/epoxy, kevlar/epoxy, or the like. Suitable types of intumescent materials are not specified.

U.S. 4,175,162 describes light transmitting fire screening materials comprising a solid layer of certain inorganic intumescent materials capable of passing light therethrough sandwiched between two panes of glass.

U.S. 4,824,709 describes textile products, e.g., carpets, having back coatings of a polymeric matrix and inorganic smoke suppressant and/or flame retardant intumescent particles. The particles may be hydrated alkali metal silicates and oxy − boron compounds.

U.S. 4,552,673 describes a composite of resin − impregnated woven cloth capable of resisting flame of a pre − determined temperature such as a ceramic or silica glass cloth, and insulating mat layer of high temperature resistant particles and an intermediate layer of the fabric which may be a glass fabric, all stitched together.

U.S. 4,871,477 describes foam polymer compositions which include micro − explosive particles com − prising various inorganic oxides, borates, carbonates, or silicates.

U.S. 4,114,369 describes a composite sheet coating providing cook off time protection for rocket motors which includes an intumescent layer comprising a polysulfide polymer, mica flake and other ingredients.

U.S. 2,912,392 describes organic intumescent compositions coated on a wall member such as a cellulosic fiberboard.

U.S. 4,748,066 describes corrugated cardboard products and the like in which sodium silicate is used as both laminating adhesive and fire protective coating. The reference notes that the sodium silicate may also be employed for producing building products such as plasterboard or paneling, but gives no specifics on how such products would be made.

## Summary of the Invention

The present invention provides an effective barrier material for protecting construction materials and the like from fire. The invention comprises in one aspect a composite having at least two layers. An inner layer adjacent to the substrate to be protected comprises an inorganic intumescent material. An outer layer comprises an inorganic composition fusible at a temperature of about 700°F or higher. The outer layer, when subjected to its fusion temperature provides an expandable continuous high temperature protective barrier between the intumescent composition of the inner layer and a fire. The fused surface of the outer layer accommodates the intumescent expansion of the underlying layer(s).

In preferred embodiments, the outer layer comprises an alkali silicate which has intumescent properties at lower temperatures, but which provides an expandable fused vapor barrier for the intumescent expansion of the inner layer at higher temperatures. The inner layer intumescent material may also be an alkali metal silicate but is more preferably a borate compound.

A further aspect of the invention comprises a gypsum board which includes the inventive composite on at least one side thereof. Applicants have shown that a 1/2 inch composite comprising a 3/8 inch gypsum board with a 1/8 inch protective barrier of the invention on one side provides more effective fire protection than a standard 1 − 1/4 inch fire wall of two 5/8 inch gypsum boards. Such a 1/2 inch composite gypsum board provides a significant reduction in weight compared to the standard 1 − 1/4 inch fire wall.

## Description of the Drawings

Fig. 1 is a fragmentary pictorial diagram of one embodiment of the invention.

Fig. 2 is a view similar to that of Fig. 1 showing a first alternate form thereof.

Fig. 3 is a view similar to that of Fig. 1 showing a second alternate form thereof.

Fig. 4 is a fragmentary top plan view of a wall fragment employing the invention in the form of Fig. 2 before being heated by fire.

Fig. 5 is a view similar to that of Fig. 4 showing the subject after an initial or early burn.

Fig. 6 is a view similar to that of Fig. 5 showing the subject after an intermediate burn.

Fig. 7 is a view similar to that of Fig. 6 showing the subject after an extended burn.

**Detailed Description of the Invention**

The composite of the invention requires two distinct layers comprising inorganic materials. An outer layer of fusible material is provided which, when exposed to flame, will fuse in the manner of a ceramic glaze to provide a protective barrier between the flame and the underlying material. An inner layer, adjacent the substrate to be protected, comprises an inorganic intumescent compound which can expand intumescently under the fused outer layer to provide a thermal barrier between the flame and the substrate to be protected.

The outer layer is a composition comprising an inorganic compound or mixture thereof characterized by a fusion temperature of about 700˚F or higher. The choice of fusion temperature will vary to some extent according to the temperature at which the inner layer will intumesce as well as the expected maximum temperature for which fire protection is desired. For most applications the fusion temperature should not be above about 3500˚F. Preferably the outer layer of a composite of the invention used on construction materials such as gypsum board and the like will have a fusion temperature of between about 700˚F and about 1500˚F.

A large variety of inorganic materials may be suitable as the fusible component of the outer layer. Many recipes for ceramic glazing materials or "frits" are known which will fuse in the desired temperature range to provide suitable high temperature expandable vapor barrier properties. Particularly suitable, fusible inorganic materials are alkali metal silicates, especially sodium or potassium silicate. The silicates have both intumescent properties at temperatures above about 700 ˚F and fusion properties so that they give additional protection to the underlying substrate beyond that provided by the expandable glaze coat which ultimately develops at high flame temperatures.

Other frit materials which may be employed for resistance at higher temperatures include $Al_2O_3 \cdot 2SiO_2 \cdot 2H_2O$ (mp 1850˚C) and $CrO_2 \cdot SiO_2$ (mp 2430˚C). While the fusing temperature of these materials may be too high for use on normal building materials, they would be useful for resistance to very high temperatures such as are required for aerospace applications.

Three examples of suitable silicate top coat layers are given below.

**Formulation 1**

| Silicate Top Coat | |
| --- | --- |
| Sodium Silicate #40 (Diamond Shamrock Co.) | 76.86 |
| 45% Solution Tripotassium Phosphate | 4.33 |
| 45% Potassium Hydroxide Solution | 1.73 |
| English Mica #160 | 15.89 |
| Lithium Stearate | 1.01 |
| Hodag™ PX‑108 Defoamer | .03 |
| Kadox™ 15 (Zinc Oxide) | .15 |
| | 100.00 |

The ingredients are blended until smooth. The weight loss on drying this formula is about 39%.

**Formulation 2**

| Latex Modified Silicate Top Coat | |
| --- | ---: |
| Sodium Silicate #40 (Diamond Shamrock Co.) | 66.82 |
| 45% Solution Tripotassium Phosphate | 3.77 |
| 45% Potassium Hydroxide Solution | 1.51 |
| English Mica #160 | 13.82 |
| Lithium Stearate | .88 |
| Hodag™ PX−108 Defoamer | .03 |
| Kadox™ 15 (Zinc Oxide) | .13 |
| Latex (47−50% Solids) | 13.04 |
| | 100.00 |

Suitable latexes include polychloroprene latex, such as Dispercoll C−200A (Mobay Corp.), an aqueous dispersion of poly−2−chlorobutadiene, and carboxylated vinylidene chloride/butadiene latex, such as XD−30208.01 (Dow Chemical Co.)

The outer layer prepared from this formulation, prior to exposure to fire, is less hard and brittle than that of Formulation 1 and is also less sensitive to distortion in high humidity or carbonate environments.

# Formulation 3

## Latex Binder-Silicate Top Coat

### Latex Binder

| | |
| --- | ---: |
| Polychloroprene Latex (50% Solids) (such as Dispercoll C-200A) | 30.2 |
| Water | 66.2 |
| Mineral Fibers | 2.0 |
| Defoamer | 0.2 |
| Water Soluble Thickener | 0.2 |
| Surfactant | 1.2 |
| | 100.0 |

### Silicate

| | |
| --- | ---: |
| Powdered Anhydrous Sodium Silicate (such as P.Q. Corp. SS-C-200® or 55-65®) | 90.6 |

The latex and silicate parts are thoroughly blended before use. The blended top coat has about two hours of usable time.

The quantities shown above provide a ratio of binder to silicate in the dried film of 1:6. This formulation provides the moisture and carbonate resistance advantages of Formulation 2 and is also more cutable and workable. Ratios of 1:4 to 1:9 can also be used.

It has been observed that sodium silicate, when heated to its fusion temperature may pass through a state where it becomes sufficiently fluid to drip or flow away from the substrate unless restrained. To support the outer layer it will typically be necessary to provide reinforcement thereto. Such reinforcement may alternatively be provided by a reinforcing fabric ply or by the incorporation of inorganic fibers and/or fillers into the outer layer composition. Suitable fabric materials may be made of ceramic, graphite, glass, silica or carbon fibers. Natural and synthetic polymer fiber fabrics, such as cotton, wool, aramid, polyester and polypropylene fabrics, may also be employed. The reinforcing fabric should be highly expandable so

5

as not to inhibit with the intumescent expansion of the inner layer. Non-woven fabrics or loosely woven graphite or polyester fabrics, such as E3N™ and E6N™ polyester fabrics sold by Phillips Fibers Corp., Greenville, SC, U.S.A., are examples of preferred materials.

Suitable inorganic fibers and fillers which may be incorporated into the outer layer composition include inorganic oil absorbing fillers such as talcs, clays, and diatomaceous earth; mica flake; and inorganic reinforcing filler and fibers such as fumed silicas and carbon, glass, mineral or ceramic fibers.

When the outer layer is an alkali metal silicate, glass fibers or glass fiber fabric reinforcing agents should be avoided as their presence can lower the fusion temperature of the silicate and worsen, rather than prevent, flow away of the outer layer. However, polymer coated glass fiber material can be used effectively, as the polymer or polymer char provides an effective barrier between the silicate and glass at temperatures where dripping of the silicate may be a problem.

The outer layer composition should also include a binder material. Suitably the binder is an organic polymer. Preferably it is a latex composition which will allow the sodium silicate to be applied in solution (such as Formulation 2). Upon application, the dried latex will form a vapor barrier to prevent the silicate from drying out so much that it cracks and/or looses its intumescent properties.

To give an architectural working surface, e.g., for application of paint, joint compound or wallpaper, the outer layer may be overcoated with a sheet of paper. To provide added protection against overdrying, a coated vapor barrier paper may be used.

The inner layer composition may comprise any number of inorganic intumescent materials, including a second layer of alkali metal silicate. Suitable other materials include borate compounds, carbonate or bicarbonate compounds, hydrated metal oxides, aluminates, alums, plumbates and inorganic phosphates. Preferred are materials which provide greater intumescent expansion than the alkali silicates. Particularly suitable compounds are borate compounds. For the purposes of this invention, the term borate means any compound having a radical which contains boron and oxygen, such as the metaborate, tetraborate, perborate, or other polyborate radicals. Examples of suitable borates are: boric acid and oxy boron compound salts of Group I and Group II elements. This description includes naturally occurring borate compounds, such as borax and colemanite. By Group I and II elements, it is meant all elements of Groups IA, IB, IIA, and IIB of the Periodic Table of Elements. Some additional examples of suitable borates are calcium metaborate, magnesium borate, and zinc borate. A preferred borate compound is sodium metaborate-4 mol., which is available in technical or photograde quality.

The inner layer composition desirably also includes a polymeric binder. Suitable binders for the inner layer intumescent material are non-aqueous solvent based polymer adhesives which do not dissolve the borate or other inner layer intumescent material. Contact cements are particularly suitable as they provide firm adherence both to the underlying substrate and the next adjacent overlying layer. A preferred inner layer formulation uses a 17% solids neoprene based adhesive in methylene chloride solvent in a 50:50 mixture of binder adhesive and sodium metaborate-4 mol.

Additional inorganic fillers or reinforcing agents, such as those described previously as suitable for reinforcement of the outer layer composition, may also be included in the inner layer formulation without departing from the invention hereof. In other embodiments additional layers of reinforcing fabric may be included within the inner layer.

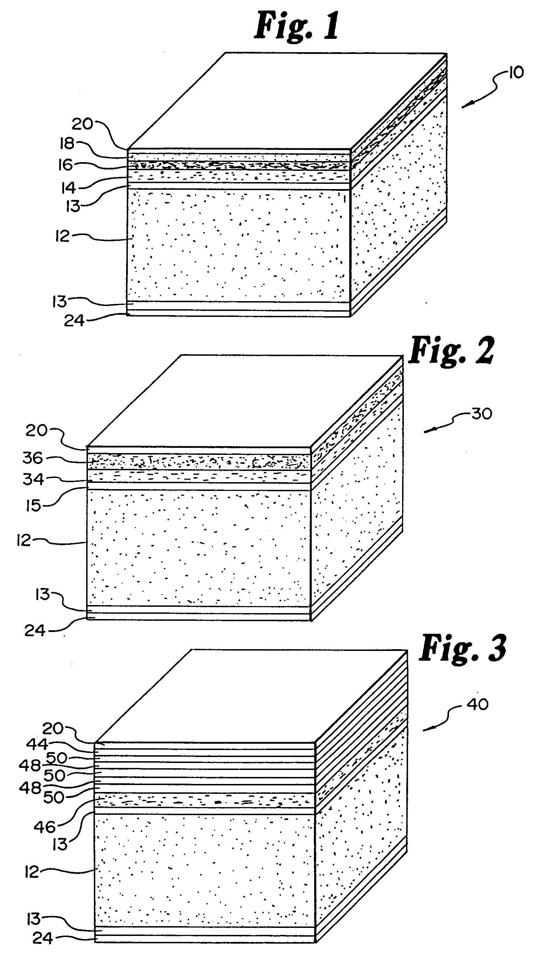

Referring now to the Figures, there is shown in Fig. 1 an embodiment **10** of the invention in which the inventive fire-protection composite has been applied to one side of a gypsum board **12** having paper cover layers **13**. The inner intumescent layer **14** is a mixture of a borate compound and a contact cement adhesive.

Overlying the inner layer **14** is a single ply of a non-woven reinforcing fabric **16**, suitably a graphite or aramid fiber reinforcing fabric.

The outer layer of the composite is a sodium silicate/latex binder formulation **18**. Layer **18** is suitably overcoated by a sheet **20** of moisture impervious coated paper or the like which supplies an architectural working surface and provides additional protection against overdrying of the sodium silicate layer **18**.

For still further protection against overdrying the paper backing **13** on the back side of gypsum board **12** may optionally be provided with a vapor barrier coating **24** of any suitable formulation.

It has been found that an approximately 1/2 inch thick composite board as in Fig. 1 comprising a 3/8 inch gypsum board (**12**, **13**), an inner layer **14** of the preferred contact cement/sodium metaborate formulation applied at a rate of about 250-300 grams per square foot, a single ply of 1/32 inch thick E6N™ fiber cloth (**16**) and an outer sodium silicate formulation (**18**) applied at a rate of about 200-400 grams sodium silicate (dry weight) per square foot gave a fireproof composite which provided superior resistance to a 1,800°F flame than did two layers of 5/8 inch thick gypsum board and had less than half the weight of the two 5/8 inch gypsum boards.

Alternative embodiments of the invention are designated by the numerals 30 and 40, respectively, in Figs. 2 and 3. Embodiment **30** in Fig. 2 comprises a paper – covered gypsum board **12**, **13** overcoated with an inner layer **34** substantially identical to layer **14** of Fig. 1. However, the non – woven fabric has been eliminated and the outer sodium silicate layer **36** has been modified by incorporation of up to 5% of reinforcing inorganic fibers and/or fillers. This embodiment is particularly suitable for spray on installation. Spray on installation also allows it to be readily applied in place to other structural materials such as studs, structural beams, ceilings, etc.

In the embodiment of Fig. 3, wallboard **40** comprises paper coated gypsum board **12,13**, outer fusible layer **44**, and inner intumescent layer **46** and several intermediate intumescent layers **48**. Each intumescent layer is separated from the overlying layer by a reinforcing fabric ply **50**, which may be the same as the fabric ply **16** in Fig. 1. In this embodiment, the inner, intermediate and outer layers may all be a sodium silicate or other alkali metal silicate/latex formulation. To use such a silicate composition for both the outer fusible layer and the inner intumescent layers, however, at least two and maybe as many as six fabric plies **50** will generally be required to approach a fire proofing effectiveness of the embodiments of Fig. 1 or 2, thereby significantly increasing the cost of this alternative.

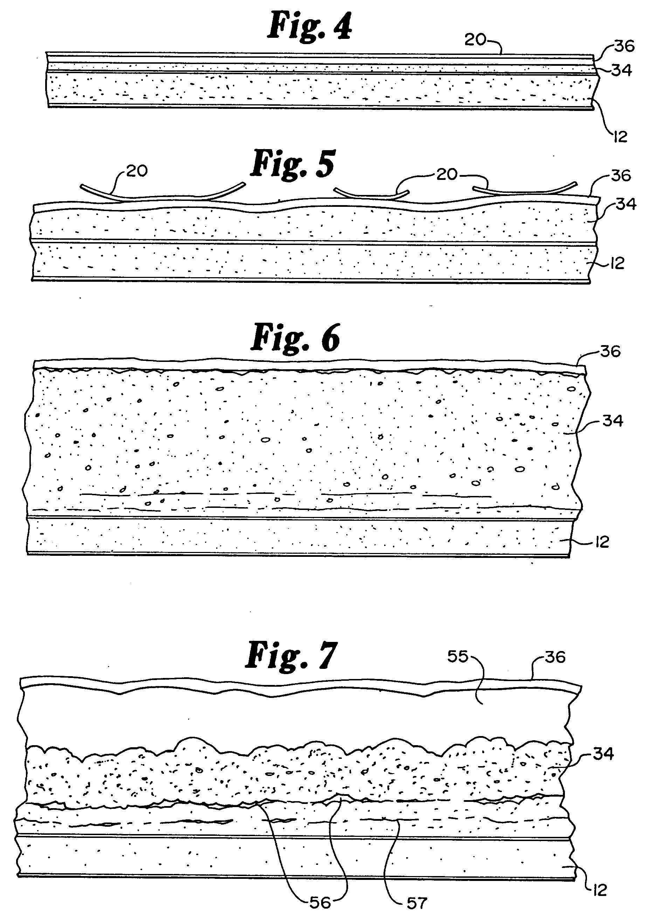

Figures 4 – 7 show the behavior of a composite of the invention upon exposure to fire. In Fig. 4 there is shown a wall segment made of a fire protected gypsum board of Fig. 2 prior to exposure to fire. Upon initial exposure to fire (Fig. 5), the outer paper layer rapidly burns off, and the inner layer **34** begins to intumesce. Outer layer **36**, however, maintains in place as a softened continuous coating which functions as a vapor barrier facilitating the continued intumescent expansion of the inner layer. After reaching maximum temperature, typically 1600° – 1800°F, the expansion of the inner layer **34** peaks and the outer layer **38** forms a hard fused protective skin which prevents degradation of the inner layer by the turbulence of the fire or the like. Upon extended burning (e.g., 30 minutes to an hour or longer), the inner layer will slowly dry out and recede to an intermediate expansion level, leaving primary, secondary and, sometimes, tertiary void layers **55**, **56** and **57**, respectively. However, the outer layer **36** stays in its fully expanded position so that insulating protection of the underlying gypsum wall board is retained.

While the invention has been illustrated as applied to gypsum board substrates, it will be understood that other substrates can benefit substantially from the inventive dual layer intumescent composition of the invention. Combustible substrates, such as wood doors, polymer insulation and the like, may be ignitable through the composite but combustion will be delayed sufficiently that use of such materials can be permitted in environments where they are now prohibited. Other non – combustible substrates can have burn through lives extended. For instance, a composite as in Fig. 1, in which the substrate is a cement/inorganic fiber board rather than gypsum, can provide burn through protection beyond 4 hours.

Further modifications of the invention will be readily apparent to those skilled in the art without undue experimentation. The invention should therefore not be considered to be limited by the specific embodi – ments described herein.

## Claims

1.  A composite barrier material for protecting an underlying substrate from fire comprising an inner layer adjacent said underlying substrate comprising an inorganic intumescent material and an outer layer comprising an inorganic compound fusible at a temperature above 700°F to form a continuous fused vapor barrier layer which is sufficiently expansible to accommodate the intumescent expansion of said inner layer.

2.  A composite as in Claim 1 wherein said outer layer further comprises an inorganic reinforcing fiber or filler stable to temperatures of at least 700°F.

3.  A composite as in Claim 1 comprising a layer of reinforcing fabric between said inner and outer layers.

4.  A composite as in Claim 3 wherein said fabric is made of glass, silicon, ceramic, graphic, carbon, polypropylene, polyester or aramid fibers.

5.  A composite as in Claim 1 wherein said outer of said layers comprising intumescent material comprises a mixture of an alkali silicate and a polymeric binder.

6.  A composite as in Claim 5 wherein said mixture comprises at least 60% of an alkali silicate compound.

7. A composite as in Claim 5 wherein said outer layer is at least 1/16" thick.

8. A composite as in Claim 5 wherein said mixture further comprises a member of the group consisting of inorganic reinforcing fillers, inorganic oil absorbing fillers and mica flake.

9. A composite as in Claim 1 wherein said inner layer inorganic intumescent material comprises an inorganic borate compound.

10. A composite as in Claim 9 wherein said borate compound is sodium metaborate.

11. A fire protected gypsum board having a composite as in Claim 1 on at least one side thereof.

12. A fire protected gypsum board having a composite as in Claim 6 on at least one side thereof.

13. A gypsum board as in Claim 12 wherein the inner layer comprises a borate compound and an organic binder.

14. A gypsum board as in Claim 13 wherein said borate compound is sodium metaborate and said organic binder comprises a non – aqueous solvent based polymer adhesive.

15. A fire resistant composite barrier material comprising inner and outer inorganic intumescent material layers, said inner layer adjacent said underlying substrate and comprising an inorganic intumescent material selected from inorganic borate compounds, inorganic carbonate and bicarbonates, hydrated metal oxides aluminates, alums, plumbates and inorganic phosphates and said outer layer comprising an inorganic compound fusible at a temperature between about 700°F and 3500°F.

16. A composite as in Claim 15 wherein said outer layer further comprises an inorganic reinforcing fiber or filler stable to temperatures of at least 700°F.

17. A composite as in Claim 15 comprising a layer of reinforcing fabric between said inner and outer layer.

18. A composite as in Claim 17 wherein said fabric is made of glass, silicon, ceramic, graphic, carbon, polypropylene, polyester or aramid fibers.

19. A composite as in Claim 18 wherein said inorganic intumescent material comprises sodium metaborate.

## *Fig. 1*

## *Fig. 2*

## *Fig. 3*

## *Fig. 4*

## *Fig. 5*

## *Fig. 6*

## *Fig. 7*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WO-A-8 909 316 (A.G.F.K.  A.G. FÜR KUNSTSTOFFVERARBEITUNG)<br>* claims 1-4; figures * | 1-4 | B32B27/24<br>E04B1/94 |
| Y | GB-A-2 160 791 (ODENWALD CHEMIE GMBH)<br>* ABSTRACT *<br>* page 1, line 36 - line 60 * | 1-4,15 | |
| A | | 5,8 | |
| D,A | US-A-3 934 066 (R. MURCH)<br>* column 2, line 39 - column 3, line 23 *<br>* column 5, line 56 - line 65 *<br>* column 8, line 23 - line 31; figures * | 1 | |
| D,Y | | 15 | |
| A | BE-A-496 414 (G. V. THORNBERG)<br>* WHOLE DOCUMENT * | 1,2,5 | |
| A | EP-A-0 135 261 (MINNESOTA MINING & MANUFACTURING CO.)<br>* page 2, line 27 - page 3, line 18 * | 9,10 | TECHNICAL FIELDS SEARCHED (Int. Cl.5) |
| A | DE-A-3 508 933 (GEBR. KNAUF WESTDEUTSCHE GIPSWERKE)<br>* claims 1,10; figure 1 *<br>* page 5, line 23 - page 8, line 21 * | 11,12 | B32B<br>E04B<br>C04B |
| D,A | US-A-4 801 496 (D. BUCHACHER)<br>* column 3, line 36 - column 4, line 34; figures * | 1,15 | |
| A | US-A-4 467 577 (R. LICHT)<br>* column 2, line 21 - line 62 * | 1 | |
| A | GB-A-2 234 938 (ENVIRONMENTAL SEALS LTD.)<br>* ABSTRACT * | 1 | |

The present search report has been drawn up for all claims

| Place of search | Date of completion of the search | Examiner |
|---|---|---|
| THE HAGUE | 16 FEBRUARY 1993 | MCCONNELL C.H. |

EPO FORM 1503 03.82 (P0401)